# EUROPEAN PATENT APPLICATION

(11) **EP 1 093 946 A2**
(43) Date of publication of application: **25.04.2001**
(21) Application number: 00121260.4
(22) Date of filing: 04.10.2000
(51) Int. Cl.: B60H 1/26

(54) **Ventilation port, particularly for bodies of trucks, trailers or the like**

(30) Priority: 22.10.1999 IT BO990118 U
(71) Applicant: Pastore & Lombardi S.r.l., 40057 Cadriano di Granarolo Emilia (Bologna) (IT)
(72) Inventor: Bortolotti, Lando, 40141 Bologna (IT)
(74) Representative: Modiano, Guido, Dr.-Ing.

(57) **Abstract**

A ventilation port (1) particularly for bodies of trucks, trailers or the like, suitable to be fitted at a through opening (2) in a wall (3) of the body, which comprises an inner box-like element (4) and an outer box-like element (5) with perforated bottoms (6,7) and with sides (8,9) which are provided, at one end, with edges (10,11) which are folded outwardly at right angles and are adapted to cover the borders of the opening (2) of the wall and, at the other end, with respective end bands (12,13) for telescopic coupling.

## Description

The present invention relates to a ventilation port particularly for bodies of trucks, trailers or the like.

It is known that in the particular field of bodies for trucks, trailers or the like, small ventilation openings are formed in the walls and are opened or closed according to the operating requirements: the material that constitutes the walls of the body can assume various thicknesses, and this leads to difficulties in producing the corresponding frames of the port: another problem is the concealment of the edge of the opening formed in the wall of the body, which is not achieved effectively by conventional ports.

The aim of the present invention is to obviate the above shortcomings and meet the mentioned requirements, i.e., to provide a ventilation port particularly for bodies of trucks, trailers or the like which can be adopted effectively in walls having different thicknesses and effectively covers the edges of the opening of the wall of the body.

Within the scope of this aim, an object of the present invention is to provide a structure which is simple, relatively easy to manufacture, safe in use, effective in operation and having a relatively low cost.

These and other objects which will become better apparent are achieved by the present ventilation port particularly for bodies of trucks, trailers or the like, suitable to be fitted at a through opening in a wall of the body, characterized in that it comprises an inner box-like element and an outer box-like element with perforated bottoms and with sides which are provided, at one end, with edges which are folded outwards at right angles and are adapted to cover the borders of the opening of the wall and, at the other end, with respective end bands for telescopic coupling one another.

Further particularities of the present invention will become better apparent from the detailed description of a preferred but not exclusive embodiment of a ventilation port, particularly for bodies of trucks, trailers or the like, according to the invention, illustrated only by way of non-limitative example in the accompanying drawings, wherein:

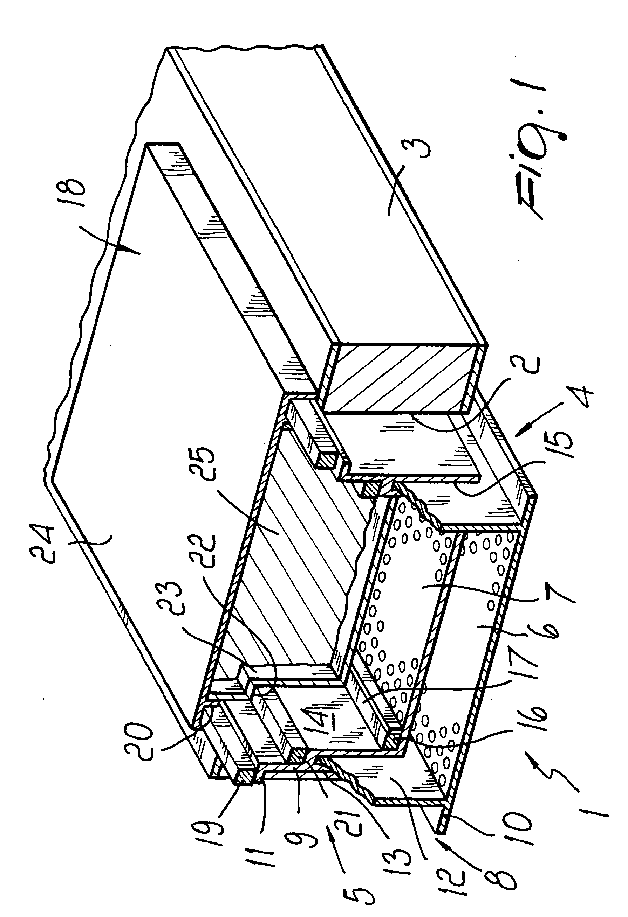

Figure 1 is a partially cutout perspective view of a ventilation port, particularly for bodies of trucks, trailers or the like according to the invention;

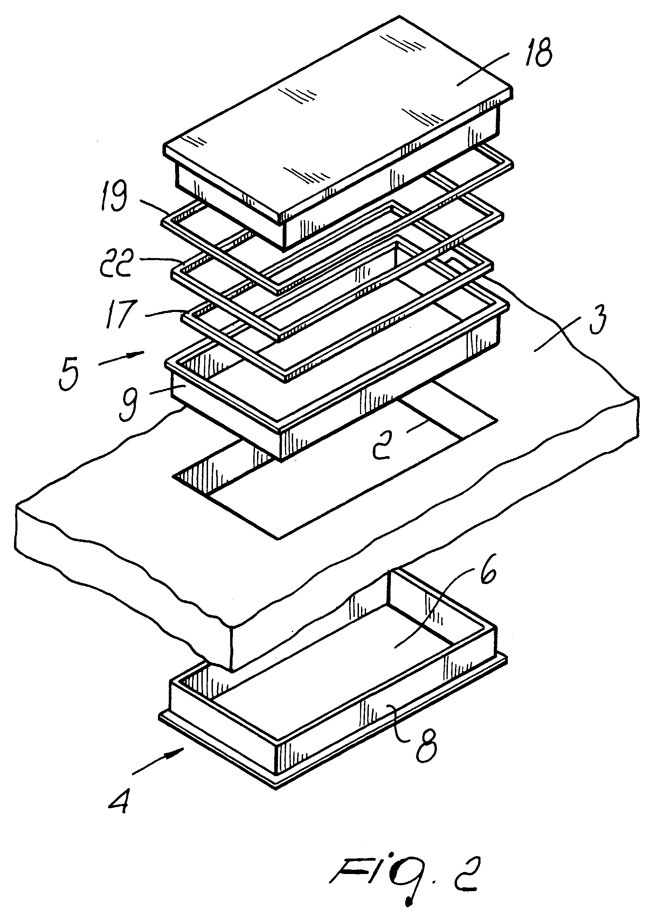

Figure 2 is a reduced-scale exploded perspective view of the components of the port.

With reference to the figures, the reference numeral 1 generally designates a ventilation port, particularly for bodies of trucks, trailers or the like, according to the invention.

The port 1 is designed to be fitted at an opening 2 which passes through a wall 3 of the body, which can have various thicknesses.

The port 1 comprises an inner box-like element 4 and an outer box-like element 5 in which the respective bottoms 6 and 7 are perforated and the respective sides 8 and 9 are provided, on one side, with edges 10, 11 which fold outwardly at right angles and are designed to cover the inner and outer borders of the opening 2 and, on the other side, with respective end bands 12 and 13 for telescopic coupling.

The end band 13 has an inner lip 14 by which it forms a deep peripheral slot 15 which the end band 12 can enter telescopically; said end band can be locked permanently, for example by gluing.

The outer box-like element 5 has, at its base, a peripheral seat 16 for the interlocking coupling of a gasket 17 made of deformable material for sealing against the edge of a closure panel 18 which can be removed manually; advantageously, the seat 16 and the gasket 17 have a substantially square cross-section.

A gasket 19 is arranged along the edge 11 of the outer box-like element 5 that is folded at right angles; said gasket has a preferably square cross-section and is made of deformable material in order to provide a seal against a corresponding outer peripheral edge 20 of the panel 18; in a further embodiment, the gasket 19 is fixed to the edge 20 and forms a seal against the edge 11.

At the end of the inner lip 14, in the box-like element, there is a peripheral seat for a gasket 21 made for flexible material, in order to provide a seal against a corresponding step 22 of the panel 18.

Advantageously, the panel 18 is formed by a substantially box-like half-shell 23 and a lid-shaped half-shell 24, between which a chamber remains which is filled with materials 25 such as foamed plastics.

Advantageously, the inner and outer box-like elements and the removable closure panel are manufactured by molding materials such as plastics.

It has thus been observed that the invention achieves the intended aim and objects, and in particular that it provides a ventilation port, particularly for bodies of trucks, trailers or the like, which can be adopted effectively on walls having different thicknesses and which effectively covers the edges of the opening of the wall of the body.

The invention thus conceived is susceptible of numerous modifications and variations, all of which are within the scope of the inventive concept.

All the details may furthermore be replaced with other technically equivalent ones.

In practice, the materials used, as well as the shapes and the dimensions, may be any according to requirements without thereby abandoning the protective scope of the appended claims.

The disclosures in Italian Utility Model Application No. BO99U000118 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ventilation port (1) particularly for bodies of trucks, trailers or the like, suitable to be fitted at a through opening (2) in a wall (3) of the body, characterized in that it comprises an inner box-like element (4) and an outer box-like element (5) with perforated bottoms (6,7) and with sides (8,9) which are provided, at one end, with edges (10,11) which are folded outwardly at right angles and are adapted to cover the borders of the opening (2) of the wall and, at the other end, with respective end bands (12,13) for telescopic coupling.

2. The port according to claim 1, characterized in that said end band (13) of the outer box-like element (14) has an inner lip by which it forms a deep peripheral slot (15) for the sliding insertion of the end band (12) of the inner box-like element (4).

3. The port according to one or more of the preceding claims, characterized in that said outer box-like element (4) has, at its base, a peripheral seat (16) for the interlocking coupling of a gasket (17) made of deformable material in order to provide a seal against the edge of a manually removable closure panel (18).

4. The port according to one or more of the preceding claims, characterized in that along the edge (11) of said outer box-like element (5) that is folded at right angles there is a gasket (19) made of deformable material in order to form a seal against a corresponding edge (20) of the manually removable closure panel (18).

5. The port according to one or more of the preceding claims, characterized in that at the end of said inner lip (14), in the box-like element, there is a peripheral seat for a gasket (21) made of deformable material in order to form a seal against a corresponding step of the manually removable closure panel (18).

6. The port according to one or more of the preceding claims, characterized in that said closure panel (18) is provided by means of two half-shells (23,24), one (23) of which is substantially box-shaped, the other one (24) being shaped like a lid, a chamber being defined between said half-shells and being adapted to be filled with materials (25) such as foamed plastics.

7. The port according to one or more of the preceding claims, characterized in that said inner (4) and outer (5) box-like elements and said removable closure panel (18) are provided by molding materials such as plastics.
